# EUROPEAN PATENT SPECIFICATION

(11) **EP 2 885 959 B1**
(45) Date of publication and mention of the grant of the patent: **05.10.2016**
(21) Application number: 14196844.6
(22) Date of filing: 08.12.2014
(51) Int. Cl.: A01B 59/06

(54) **Implement detection arrangement for a tractor**
Anbaugerätedetektionsanordnung für einen Traktor
Dispositif de détection d'outil destiné à un tracteur

(30) Priority: 23.12.2013 GB 201322856
(43) Date of publication of application: 24.06.2015
(73) Proprietor: AGCO International GmbH, 8212 Neuhausen am Rheinfall (CH)
(72) Inventor: Gschwendtner, Christian, 87616 Marktoberdorf (DE)
(74) Representative: AGCO Intellectual Property Department

(56) References cited:
- WO-A1-88/02982
- WO-A1-2013/053645
- DE-A1- 3 604 218
- FR-A1- 2 709 102
- US-A1- 2008 110 647

## Description

This invention concerns an implement detection arrangement for a tractor.

A hitch, such as a three-point linkage is one known arrangement used to attach implements to a drawing vehicle, for example an agricultural tractor. The implement may be fully-mounted or semi-mounted whereby a semi-mounted implemented has a wheel engaging with the ground during soil operation while a fully-mounted implement puts all its load on the three-point linkage.

Three point linkages most frequently consist of two lower lifting arms to which an implement is attached. The lower lifting arms can be pivoted by respective hydraulic actuating cylinders to adjust the height position of the implement relative to the tractor. Furthermore, these lower lifting arms may be manually adjusted in length and thus be adapted to the type of implement to be attached. An additional top link connects the implement to the tractor on a level above the lower lifting arms. This top link is used to pivot the implement about a horizontal transverse axis and is adjustable by means of a threaded connection, or a hydraulic cylinder.

Alternative designs of three-point linkages are known, such as the arrangements shown in US6 321 851, US 2003/217852 and US 5 997 024 in which the lower links are replaced by two, or four variable length hydraulic rams. This variable length ram arrangement enables multi axis movement of any implement attached to the linkage.

To control the three-point linkage, modern tractors are mainly equipped with electronic linkage control systems to improve work quality and operator comfort during operation.

Such electronic linkage control systems operate in three well known modes:
- Position control: In general, the tractor speed is kept constant by a speed control system and the position of the lower lifting arms is sensed directly or indirectly so that the working depth of the implement in the soil can be adjusted within limits set by the operator whilst the speed of the tractor is kept constant.
- Draft control: The implement is raised and lowered in the soil depending on the draft force applied by the implement to reduce fuel consumption, avoid engine stall or avoid damage of the implement or tractor. Again, vehicle speed is kept constant. If the implement is lowered into the ground an initial draft is applied defining a zero level. The operator can then set a value representing a force increase which means that the operator can decide how fast the implement is lifted when a small force increase or a large force increase occurs. The value of the force entered by the operator does not represent an exact value of the force applied, e.g. 5 kN, but defines the responsiveness of the draft control. The objective of this function is to move the implement while avoiding excessive draft or pull force variations. Therefore, a draft force sensor, typically in the form of a draft force sensing pin which connects the lower lifting arms to the tractor chassis is used to measure the horizontal load applied to the tractor by the implement.

- Intermix of position/draft control: This control arrangement, as its name implies is a mixture of position and draft control in which a draft control system can only lift the implement within a limited range of positions. This function is provided to avoid excessive movement of the implement in the soil resulting in poor working quality. Again, vehicle speed is kept constant by a speed control system.

The applicant's pending application WO2013/053645 describes an electronic linkage control wherein the draft force sensing pin is omitted and the variation of the draft force of the linkage is determined from the variation in the hydraulic drive circuit pressure.

In addition, the operator can manually adapt the height of the implement by using a trigger in the cab.

Problems can arise with the linkage controls described above if a trailer is connected to the vehicle by means of the tow bar. If the lower links are raised by change in draft force, they may crash into the tow bar resulting in damage. So the operator should lock the linkage to avoid such a collision. This can be easily forgotten by an operator.

It is advantageous to have an automatic electronic linkage control which controls the height of the linkage depending on the drag force. However, if no implement is attached, this function needs to be deactivated to avoid collision of the linkage with the ground or a tow bar. As a result it is therefore necessary to detect whether an implement is attached to the linkage or not so that movement of the linkage can be prohibited or allowed by an automatic control.

Systems have been proposed to detect if an implement is attached to the linkage.

A system may use a pressure sensor installed in the lifting cylinder of the linkage. For example, an unloaded linkage may result in the lifting cylinders indicating a pressure of 11 bar. When a plough is semi mounted and is partly supported by the ground, the pressure may change to about 15 bar as the ground supports some of the weight of the plough. The difference therefore between the implement being semi mounted for operation and an unloaded linkage is around 4 bar which can be too small a change in pressure to detect, therefore it can be difficult for a system to recognise whether an implement is attached or not. When the plough is fully lifted for rotation during a headland turn, the pressure may increase to 45 bar which can be easily detected. However, a farmer may use a variety of different implements having different weights which can range between 800 kg to 5000 kg making it impossible to use the pressure in the lifting cylinder for detecting the presence or absence of an implement.

Position sensors can be used to detect the position of an attached implement or trailer to the linkage or ball hitch, but the position of the linkage does not indicate whether an implement is attached.

A tractor control unit may receive information by way of an ISOBUS system wherein an implement informs the tractor control unit of its attachment to the tractor. Alternatively an electric supply/light connector, or fluid couplings on the tractor to which the implement is attached may be used to detect the attachment of an implement. But these means do not provide information as to where the implement is attached, that is whether the implement is attached to the linkage or to a ball hitch, or at what height the implement is attached.

US2008/1110647 discloses a method for determining the weight and centre of gravity of a ground engaging implement connected to a 3-point hitch on an agricultural tractor using hitch cylinder pressure and hitch position as calibration inputs to a hitch control system.

FR2709102 discloses a process for determining the weight of an implement connected to a tractor in which the pressure of a lifting cylinder is used.

It is an aim of the Invention to provide a reliable means to notify a operator of a tractor as to whether an implement is attached to the tractor and the position it is attached. It is a further aim of the invention that the reliable means does not require further devices to be installed on the tractor thus keeping costs to a minimum and keeping precious space on the tractor free.

According to the invention there is provided an implement detection arrangement on a tractor having a linkage system for attaching the implement thereto, the linkage system comprising a lifting cylinder having a position and/or pressure sensor and wherein changes of position and/or pressure of the lifting cylinder are measured when the tractor accelerates and/or travels uneven ground to provide a first parameter and a comparison is made with a second parameter measured on said tractor to determine whether an implement is attached to the tractor, characterised in that the second parameter is determined by a position or pressure sensor of a suspension cylinder of a wheel suspension of the tractor.

Most tractors are already provided with suspension cylinder sensors, therefore the use of these sensors to provide a second parameter for comparison with the first parameter does not involve the addition of further equipment or devices to the tractor, thus not requiring any further space.

Preferably, a reference value of the first parameter is compared to a measured value of the second parameter, said reference and measured values comprising characteristic maps, or absolute values, or relative values of the first and second parameters.

The reference value may be compared with the measured value wherein said reference value or said measured value is time delayed with respect to the other value.

Preferably, the first and second parameters are recorded during acceleration of the tractor, or travel across an uneven surface and a comparison made to determine whether an implement is attached to the tractor.

If, during acceleration the changes in pressure or position of the suspension cylinder and the lifting cylinder occur at the same time an implement is attached.

If changes in both cylinders occur at the same and the lifting cylinder shows a pressure change or a change in position greater than a pre-determined minimum value, an implement is attached.

The height the implement is carried at relative to the ground may be determined from the change in pressure or position of the lifting cylinder.

More preferably, the changes in pressure and/or position of both cylinders are processed by a tractor control unit.

This way a operator can be notified by the control unit that an implement is, or is not attached. If the operator is notified that an implement is attached, he can then enter the type of implement into the unit. If the control unit is calibrated so that the pressure of the lifting cylinder is known for different heights above the ground at which the implement is carried, the operator can also be informed of the height at which the implement is attached.

The present invention will now be described, by way of example only, with reference to the accompanying drawings in which:-
Figure 1 of is a side view of a tractor,
Figure 2 is Figure 2 is a schematic view of front wheel suspension as viewed from line X-X of figure 1,
Figure 3 diagrammatically shows a side view of a tractor with a linkage at the rear of the tractor, and
Figures 4 are graphs comparing the reaction of a suspension cylinder and a lifting cylinder in accordance with the invention.

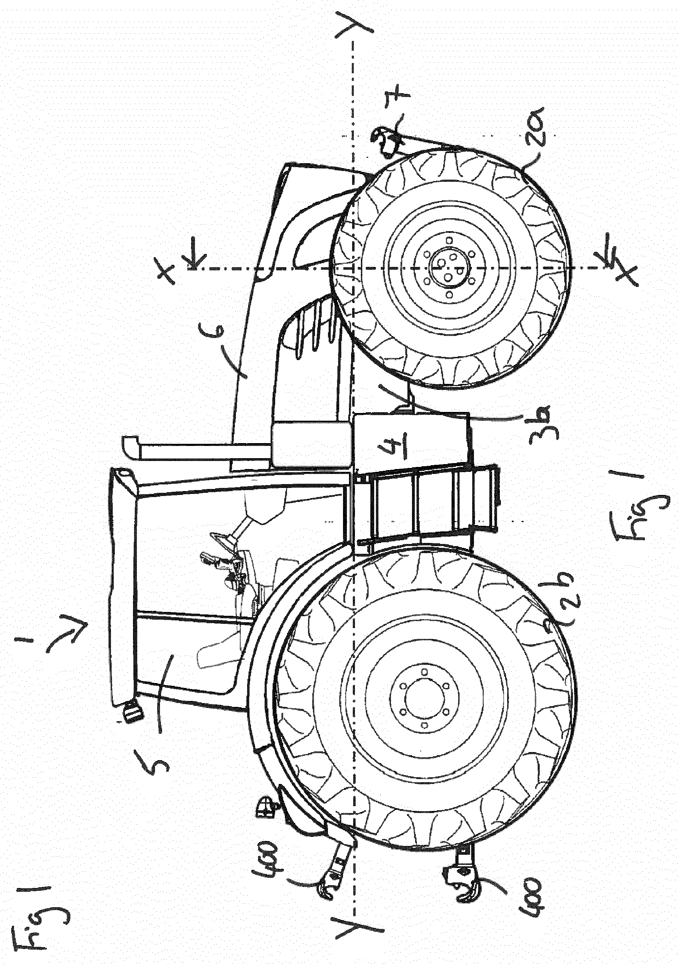

Figure 1 is side view of an agricultural tractor 1 having front wheels 2a and rear wheels 2b and a chassis 3b which supports a fuel reservoir 4. A operator's a cab 5 having a view over engine hood 6 is also shown. Front lifting means 7 are provided on the front end of the tractor 1. A dotted line Y indicates the longitudinal axis of the tractor. A top link and the lower lifting arms of a three point linkage 400 are shown at the rear of the tractor. The linkage 400 is discussed in detail further on.

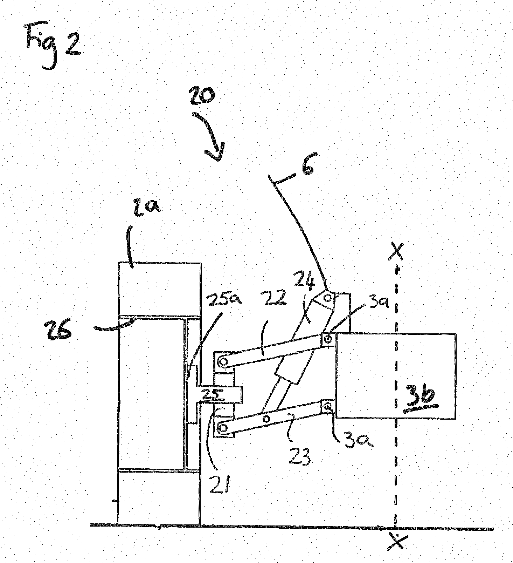

The front wheels 2a are connected to the chassis by means of an independent wheel suspension arrangement which is schematically shown in Figure 2. In figure 2 suspension arrangement 20 provides independent suspension for one of the front wheels 2a and is arranged transverse to the longitudinal axis of the tractor connecting a wheel to a side of the chassis 3b. As the suspension arrangement for left and right front wheels 2a are mirrored about the longitudinal vehicle axis, only one wheel on one side is shown. Line X-X represents a line perpendicular to the ground through the centre of the chassis 3b mid way between the two front wheels 2a.

Front wheels 2a are pivotably attached to the wheel carrier 21 of the suspension arrangement 20. Each suspension arrangement 20 comprises two upper transverse links 22 and two lower transverse links 23. The links are arranged respectively into two herringbone arrangements. The inboard ends of the links 22, 23 are each pivotably connected to the chassis 3b at chassis pivot points 3a in a known manner as described in EP 1 600 311 to allow the links 22, 23 to pivot about an axis parallel to the longitudinal axis of the tractor. The outboard ends of links 22, 23 are connected to the wheel carrier 21 so that a relative rotation about a vertical axis (not shown)is possible for steering. For clarity reasons, the means to provide steering are not shown.

A suspension cylinder 24 which is connected to the wheel carrier 21, or alternatively to one of the links 22, 23 and is supported on an upper portion of the chassis 3b. Suspension cylinder 24 can be extended, or retracted by pressurising the respective chamber of the suspension cylinder 24. The respective chambers are connected to an accumulator (such as a membrane reservoir) to provide damping. The suspension cylinder 24 is provided with sensors which sense the pressure of the cylinder and/or the position of the cylinder. Such sensors are typically used for the adjusting the amount of damping when moving from road use to field use.

The wheel carrier 21 receives the wheel drive shaft 25 which may be driven by a drive shaft connected to the transmission which are not shown for clarity reasons. Wheel drive shaft 25 is provided with a hub flange 25a to which the rims 26 of the front wheels 2a are attached

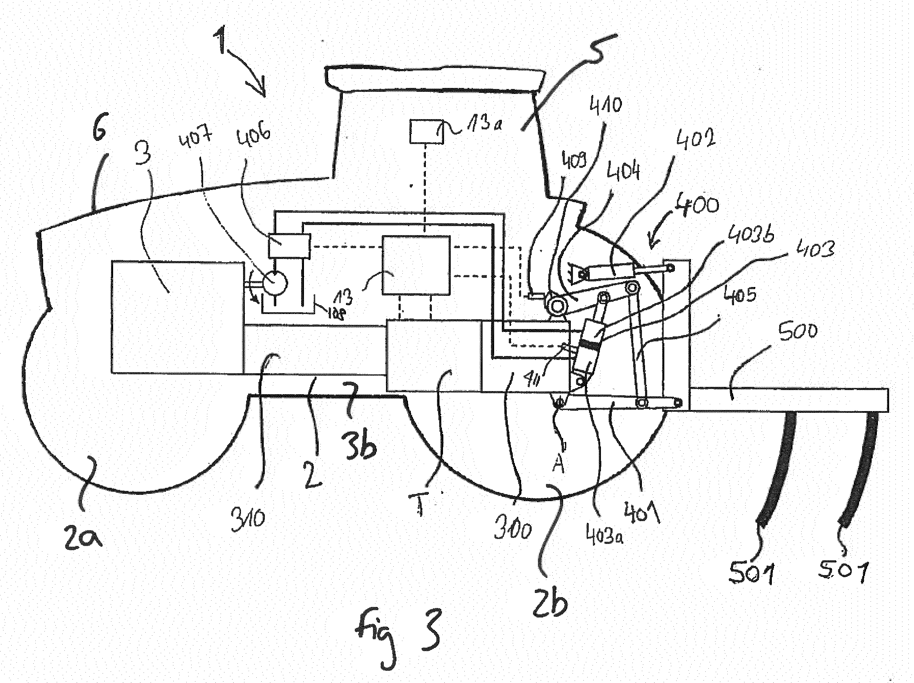

Figure 3 shows the rear of a tractor in which a three-point linkage 400 is attached to the rear axle housing 300 and mainly consists of two lower lifting arms 401 to which an implement is attached. A plough 500 with ground engaging means 501 is attached to lower lifting arms 401. An additional top link 402 connects the implement 500 to the tractor 1. The top link 402 is of a hydraulic type adjustable in length by hydraulic fluid to adjust inclination of the plough 500 to the ground. The lower lifting arms 401 can be pivoted about axis A by respective hydraulic actuating cylinders 403 moving rocker arm 404 and lift rod 405. The hydraulic actuating cylinders 403 are supplied with actuating fluid by a control valve 406 to control which chamber 403a (to lift the implement) or chamber 403b (to lower the implement) of the hydraulic actuating cylinders 403 is charged with fluid. Control valve 406 is connected to a pump 407 driven by combustion engine 3 and connected with a fluid tank 408.

The position of the lower lift arms 401 is indirectly measured by a position sensor 409 sensing the position of a cam 410 attached to rocker arm 404.

An additional pressure sensor 411 is provided to measure fluid pressure in the chamber 403a of the hydraulic actuating cylinders 403. The fluid in the chamber 403a is compressed when the implement weight is fully taken by the three-point linkage 400 and thereby a pressure increase indicates movement of the implement..

A tractor control unit 13 is provided to control various functions of the vehicle. The control unit 13 is electronically connected to various components via CAN-BUS, e.g. transmission, display and input devices. The control unit 13 also contains software to drive the electronic linkage control system. The control unit 13 is connected to an input and display device 13a in the tractor cab to receive input from the operator and show information to the operator. Sensor 409, control valve 406 and pressure sensor 411 are connected to the control unit 13 as are position sensors and pressure sensors of the suspension cylinders.

Certain operating conditions of the tractor have been identified wherein there is a change in the pressure/position of the lifting cylinder and a change in pressure/position of the suspension cylinder, namely when a tractor travels over an uneven surface, or accelerates.

As a tractor travels over a bump or uneven surface, or accelerates, the vehicle pitches, that is the front of the vehicle will move so that is higher or lower than the rear of the vehicle. In this case the pressure and position of the suspension cylinders change as damping comes into effect. At the same time as passing over the bump, or accelerating, the pressure and position of the lifting cylinders at the rear of the tractor also change. Therefore, if the control unit compares the changes in the pressure or position of suspension cylinder with the changes in the pressure or position of the lifting cylinder and similar changes occur at the same time, the control unit can notify that an implement is attached to the tractor. Small changes in the pressure and/or position of the lifting cylinders will occur even if no implement is attached and the control unit is calibrated such that if these changes are negligible, the system notifies that no implement is attached.

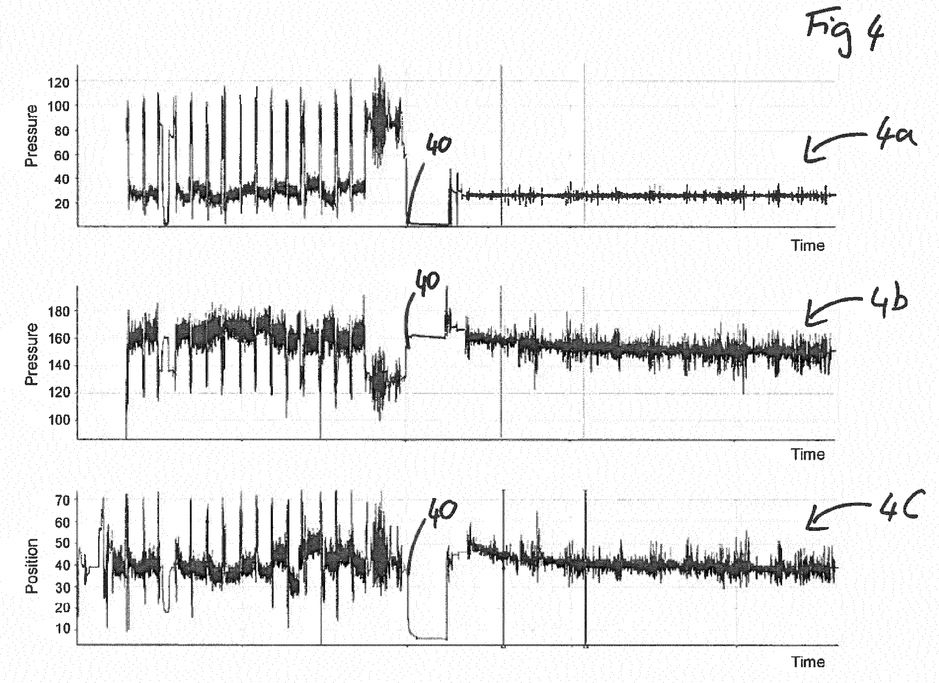

Figure 4 shows three graphs in which graph 4a shows the variation of pressure with time in a lifting cylinder of a linkage as a tractor travels over uneven ground carrying an implement such as a plough. At point 40 on the graph, the plough is detached and as can be seen the variation of pressure thereafter is negligible.

Graph 4b shows the variation of pressure with time of a front axle suspension cylinder under the same circumstances as graph 4a. Again after point 40 the change in pressure is negligible. As can be seen by comparing graph 4a and 4b, the changes in both the lifting cylinder and the suspension cylinder occur at the same time with the changes of the suspension cylinder being greater.

Graph 4c shows the change in position of the suspension cylinder under the same circumstances as graphs 4a and 4b. As can be seen the changes in the position of the cylinder reflect the changes in pressure of graph 4b as would be expected.

The changes of the lifting cylinder (both in position and pressure) will be greater the higher the implement is attached above the ground and the changes will also be greater, the heavier the implement is. If, for example, the implement is carried for transportation, it will be held high. If however an implement is lifted for a headland turn whilst ploughing for example, it will be carried close and above the ground.

Since the pressure/position of the lifting cylinder will change according to the height at which a given implement is carried relative to the ground, the tractor control unit may be calibrated for a number of different implement weights carried at different heights, so that if the operator is notified that an implement is attached, he can input the type of implement which is attached so that further notifications can indicate the height that the specified implement is attached at.

In the embodiment described herein, the pressure or position of the lifting cylinder is identified as a first parameter and is compared to a second parameter, being the pressure or position of the suspension cylinder. Alternatively, the system may use other parameters as second parameters instead of the position/pressure of the suspension cylinder. For example, the second parameter by be one of the following:
▪ a wheel load sensor on a front or rear axle, or
▪ an inclination sensor (such as one which is already installed on the tractor and used for a GPS positioning system), or
▪ a multi-axle acceleration sensor, for example an anti-locking brake system

The comparison is made by taking a reference value, or reference map of the first parameter and comparing it to a reference value or characteristic map of the second parameter. The reference value may be an absolute value, such as an amplitude or magnitude of the parameter. For example, if during acceleration the lifting cylinder shows an absolute pressure/position value at a time, t say = 5 seconds after acceleration has started, then this absolute pressure/position value can be compared directly to the second parameter, such as the pressure/position value of the suspension cylinder at time t = 5 seconds. The reference value may be a relative reference in that the magnitude, or amplitude of the change of pressure/position of the lifting cylinder is unlikely to be as large as respective changes of the suspension cylinder. In such a case the change in pressure/position of the lifting and suspension cylinders is compared relatively. Further, the comparison may be made on a time delay. For example, if the tractor travels over a bump and the front suspension cylinder shows a change of pressure/position, the lifting cylinder will show a change of pressure/position with a time delay. Further, the change in pressure/position of the lifting cylinder with no implement attached may be slower than with a implement attached. In this case the reference, or absolute values may be compared on a time delay.

## Claims

1. A tractor (1) provided with an implement detection arrangement, wherein said tractor (1) is provided with a linkage system (400) for attaching the implement (500) thereto, the linkage system comprising a lifting cylinder (403) having a position and/or pressure sensor (409, 411) and wherein changes of position and/or pressure of the lifting cylinder (403) are measured when the tractor (1) accelerates and/or travels uneven ground to provide a first parameter and a comparison is made with a second parameter measured on said tractor to determine whether an implement (500) is attached to the tractor (1), **characterised in that** the second parameter is determined by a position or pressure sensor of a suspension cylinder (24) of a wheel suspension of the tractor (1).

2. An implement detection arrangement as claimed claim 1 wherein a reference value of the first parameter is compared to a measured value of the second parameter, said reference and measured values comprising characteristic maps, or absolute values, or relative values of the first and second parameters.

3. An implement detection arrangement as claimed in 2 wherein the reference value is compared to the measured value and said reference value or said measured value is time delayed with respect to the other value.

4. An implement detection arrangement as claimed in any preceding claim wherein the first and second parameters are recorded during acceleration of the tractor (1), or travel across an uneven surface and a comparison made to determine whether an implement (500) is attached to the tractor (1).

5. An implement detection arrangement as claimed in any preceding claim wherein if, during acceleration the changes in pressure or position of the suspension cylinder (24) and the lifting cylinder (403) occur at the same time an implement (500) is attached.

6. An implement detection arrangement as claimed in any preceding claim wherein if the changes in both cylinders (24, 403) occur at the same and the lifting cylinder (403) shows a pressure change or a change in position greater than a pre-determined minimum value, an implement (500) is attached.

7. An implement detection arrangement as claimed in any preceding claim wherein the height the implement (500) is carried ls determined from the change in pressure or position of the lifting cylinder (403).

8. An implement detection arrangement as claimed in any preceding claim wherein the changes in pressure and/or position of both cylinders (24, 403) are processed by a tractor control unit (13).

## Patentansprüche

1. Traktor (1) mit einer Arbeitsgerätdetektionsanordnung, wobei der Traktor (1) mit einem Verbindungssystem (400) zum Befestigen des Arbeitsgeräts (500) versehen ist, wobei das Verbindungssystem einen Hubzylinder (403) mit einem Positions- und/oder Drucksensor (409, 411) aufweist und wobei Veränderungen der Position und/oder des Drucks des Hubzylinders (403) gemessen werden, wenn der Traktor (1) beschleunigt und/oder sich auf unebenem Untergrund bewegt, um einen ersten Parameter bereitzustellen, und ein Vergleich mit einem an dem Traktor gemessenen zweiten Parameter getroffen wird, um zu bestimmen, ob ein Arbeitsgerät (500) an dem Traktor (1) befestigt ist, **dadurch gekennzeichnet, dass** der zweite Parameter durch einen Positionssensor oder Drucksensor eines Federungszylinders (24) einer Radaufhängung des Traktors (1) bestimmt wird.

2. Arbeitsgerätdetektionsanordnung nach Anspruch 1, wobei ein Referenzwert des ersten Parameters mit einem gemessenen Wert des zweiten Parameters verglichen wird, wobei der Referenzwert und der gemessene Wert charakteristische Kennfelder oder Absolutwerte oder Relativwerte des ersten und zweiten Parameters aufweisen.

3. Arbeitsgerätdetektionsanordnung nach Anspruch 2, wobei der Referenzwert mit dem gemessenen Wert verglichen wird und der Referenzwert oder der gemessene Wert in Bezug auf den anderen Wert zeitverzögert ist.

4. Arbeitsgerätdetektionsanordnung nach einem der vorhergehenden Ansprüche, wobei der erste und der zweite Parameter während einer Beschleunigung des Traktors (1) oder während einer Fortbewegung über eine unebene Fläche aufgenommen werden und ein Vergleich angestellt wird, um festzustellen, ob ein Arbeitsgerät (500) an dem Traktor (1) befestigt ist.

5. Arbeitsgerätdetektionsanordnung nach einem der vorhergehenden Ansprüche, wobei ein Gerät (500) angeschlossen ist, wenn während einer Beschleunigung die Veränderungen des Drucks oder der Position des Federungszylinders (24) und des Hubzylinders (403) gleichzeitig auftreten.

6. Arbeitsgerätdetektionsanordnung nach einem der vorhergehenden Ansprüche, wobei ein Gerät (500) angeschlossen ist, wenn die Veränderungen in beiden Zylindern (24, 403) gleichzeitig auftreten und der Hubzylinder (403) eine Veränderungen des Drucks oder der Position größer als ein vorgegebener Minimalwert zeigt.

7. Arbeitsgerätdetektionsanordnung nach einem der vorhergehenden Ansprüche, wobei die Höhe, in der das Arbeitsgerät (500) getragen wird, aus der Veränderung des Drucks oder der Position des Hubzylinders (403) bestimmt wird.

8. Arbeitsgerätdetektionsanordnung nach einem der vorhergehenden Ansprüche, wobei die Veränderungen des Drucks und/oder der Position beider Zylinder (24, 403) durch eine Traktorsteuereinheit oder Traktorregeleinheit (13) verarbeitet werden.

## Revendications

1. Tracteur (1) équipé d'un dispositif de détection d'outillage, dans lequel ledit tracteur (1) comporte un dispositif de liaison (400) destiné à relier l'outillage (500) à ce dernier, le dispositif de liaison comprenant un vérin de levage (403) comportant un capteur de position et/ou de pression (409, 411) et dans lequel des variations de position et/ou de pression du vérin de levage (403) sont mesurées lorsque le tracteur (1) accélère et/ou se déplace sur un sol irrégulier afin de délivrer un premier paramètre et une comparaison est faite avec un second paramètre mesuré sur ledit tracteur afin de déterminer si un outillage (500) est fixé sur le tracteur (1), **caractérisé en ce que** le second paramètre est déterminé par un capteur de position ou de pression d'un vérin de suspension (24) d'une suspension de roue du tracteur (1).

2. Dispositif de détection d'outillage selon la revendication 1, dans lequel une valeur de référence du premier paramètre est comparée à une valeur mesurée du second paramètre, lesdites valeurs de référence et mesurées comprenant des cartes caractéristiques ou des valeurs absolues ou des valeurs relatives des premier et second paramètres.

3. Dispositif de détection d'outillage selon la revendication 2, dans lequel la valeur de référence est comparée à la valeur mesurée et ladite valeur de référence ou ladite valeur mesurée est retardée dans le temps par rapport à l'autre valeur.

4. Dispositif de détection d'outillage selon l'une quelconque des revendications précédentes, dans lequel les premier et second paramètres sont enregistrés au cours de l'accélération du tracteur (1), ou de son déplacement sur une surface irrégulière, et une comparaison est faite afin de déterminer si un outillage (500) est fixé sur le tracteur (1).

5. Dispositif de détection d'outillage selon l'une quelconque des revendications précédentes, dans lequel si, au cours de l'accélération, des variations sur la pression ou la position du vérin de suspension (24) et du vérin de levage (403) se produisent simultanément, un outillage (500) est fixé.

6. Dispositif de détection d'outillage selon l'une quelconque des revendications précédentes, dans lequel, si des variations sur les deux vérins (24, 403) se produisent simultanément et le vérin de levage (403) présente une variation de pression ou une variation de position supérieure à une valeur minimum prédéterminée, un outillage (500) est fixé.

7. Dispositif de détection d'outillage selon l'une quelconque des revendications précédentes, dans lequel la hauteur à laquelle l'outillage (500) est transporté est déterminée à partir de la variation de la pression ou de la position du vérin de levage (403).

8. Dispositif de détection d'outillage selon l'une quelconque des revendications précédentes, dans lequel les variations sur la pression et/ou la position des deux vérins (24, 403) sont traitées par une unité de commande de tracteur (13).
